# EUROPÄISCHE PATENTSCHRIFT

(11) **EP 1 622 969 B1**
(45) Veröffentlichungstag und Bekanntmachung des Hinweises auf die Patenterteilung: **07.03.2007**
(21) Anmeldenummer: 04731177.4
(22) Anmeldetag: 05.05.2004
(51) Int. Cl.: C08J 3/24, C08F 8/32, C08G 59/50, C08G 18/10

(54) **VERWENDUNG VON DIAZEPIN-DERIVATEN ALS LATENTE HÄRTERKOMPONENTE**
USE OF DIAZEPINE DERIVATIVES AS LATENT HARDENING COMPONENTS
UTILISATION DE DERIVES DE DIAZEPINE EN TANT QUE COMPOSANT DE DURCISSAGE LATENT

(30) Priorität: 07.05.2003 DE 10320289
(43) Veröffentlichungstag der Anmeldung: 08.02.2006
(73) Patentinhaber: Construction Research & Technology GmbH, 83308 Trostberg (DE)
(72) Erfinder: INGRISCH, Stefan, 83376 Truchtlaching (DE); MAIER, Alois, 84549 Engelsberg (DE); PFEUFFER, Thomas, 83308 Trostberg (DE); STEIDL, Norbert, 83361 Kienberg (DE); WINKELMANN, Herbert, 84518 Garching (DE)
(74) Vertreter: Dey, Michael
(86) Internationale Anmeldenummer: PCT/EP2004/004780
(87) Internationale Veröffentlichungsnummer: WO 2004/099294

(56) Entgegenhaltungen:
- DE-A- 2 141 699
- DE-A- 3 803 508
- US-A- 3 657 192
- US-A- 6 077 929
- DATABASE WPI Derwent Publications Ltd., London, GB; AN 1970-52033R XP002290479 "Epoxy resin composition" & JP 45 020788 B (TEIJIN LTD) 1970

## Beschreibung

Die vorliegende Erfindung betrifft die Verwendung von Diazepin-Derivaten als latente Härterkomponente für Harze, die gegenüber Aminen reaktive funktionelle Gruppen aufweisen, insbesondere Polyurethan- und Polyepoxid-Harze.

Als latente Härterkomponenten bezeichnet man eine Härterkomponente, die für sich alleine inaktiv ist und deshalb einer Aktivierung bedarf, um aktiv zu werden. Als Aktivator kann z.B. Feuchtigkeit aus der Luft wirken. Derartige latente Härterkomponenten werden insbesondere für feuchtigkeitserhärtende Polyurethanmassen bei der Herstellung von Dichtmassen, Klebstoffen und Beschichtungsmitteln eingesetzt. Entsprechend dem Stand der Technik sind schon eine ganze Reihe von latenten Härtern beschrieben worden, die jedoch alle den gravierenden Nachteil aufweisen, dass während der Härtungsreaktion leichtflüchtige organische Verbindungen freigesetzt werden, welche entweder die Umwelt belasten und/oder gesundheitlich problematisch erscheinen.

So werden gemäß der DE-OS 30 19 356 als Härter für Polyisocyanate Aldimin- und Oxazolidingruppen aufweisende Verbindungen beschrieben, die a) durch Umsetzung von Polyaminen mit einer Epoxidverbindung und b) der anschließenden Cyclisierung der in Stufe a) gebildeten Polyaminoalkohole mit Aldehyden hergestellt werden. Bei der Aushärtung dieser Aldiminooxazolidine mit Polyisocyanaten werden in Gegenwart von Wasser oder atmosphärischer Feuchtigkeit Aldehyde abgespalten, die unter Umständen eine starke Geruchsbelästigung darstellen und deshalb nur im Außenbereich eingesetzt werden können.

Aus der DE-OS 36 24 924 sind feuchtigkeitshärtende, lagerstabile Einkomponenten-Polyurethansysteme bekannt, die neben dem Polyurethan-Prepolymer als erfindungswesenttiche Komponente ein Polyaldimin als Härter enthalten. Auch bei diesen Polyurethansystemen werden während der Härtung Aldehyde abgespalten, wodurch eine Anwendung für den Innenbereich von vorneherein ausgeschlossen ist. Ein weiterer Nachteil bei diesen Polyurethan-Systemen ist die Tatsache, dass die entsprechenden Polyurethan-Prepolymere eine relativ hohe Viskosität aufweisen, so dass zur Verminderung der Viskosität Malonsäurediethylester zugesetzt werden müssen.

Entsprechend der DE-OS 40 21 659 werden Bisoxazolane als Härter für Polyurethansysteme empfohlen, die durch Umsetzung von Diethanolamin mit Aldehyden hergestellt werden. Zwar können auf diese Weise niedrigviskose und lösemittelfreie Produkte zur Verfügung gestellt werden, doch spalten auch diese Bisoxazolane während der Härtungsreaktion pro Mol Härter zwei Mol Aldehyd ab, was mit den bereits vorstehend beschriebenen Nachteilen verbunden ist. Des Weiteren werden in der EP-A 291 850 Polyurethan-Einkomponenten-Systeme beschrieben, die neben dem Polyurethan-Prepolymer einen latenten Härter aus der Gruppe Oxazolidine, Enamine und Azomethine, vorzugsweise Ketimine und/oder Aldimine enthalten. Auch diese Verbindungen spalten bei der Hydrolyse in Gegenwart von Feuchtigkeit unerwünschte Aldehyde oder Ketone ab. Außerdem müssen den Polyurethan-Prepolymeren bzw. Polyurethan-Einkomponenten-Systemen zur Verminderung des Viskositätsanstiegs Malonsäurediethylester in einer Menge von bis zu 10 Gew.-% zugesetzt werden.

Gemäß der WO 95/11933 werden Aldimin-Oxazolidine offenbart. Neben der relativ aufwendigen Herstellung muss die Freisetzung von Aldehyden bei der Härtungsreaktion dieser Verbindungen als besonders nachteilig angesehen werden.

Schließlich sind aus der EP-A 947 529 Polyurethan-Prepolymere bekannt, die neben den Isocyanat-Gruppen noch latente Aminogruppen aufweisen.

Die Herstellung dieser Polyurethan-Prepolymere erfolgt durch Addition eines Amino-Aldimins oder eines Cycloaminals an die Isocyanatgruppe eines Polyurethan-Polymers. Auch bei diesem Polyurethan-System lässt sich die Abspaltung von Benzaldehyd während der Härtungsreaktion mit Hilfe von Wasser oder Luftfeuchtigkeit nicht vermeiden.

Der vorliegenden Erfindung lag daher die Aufgabe zugrunde, eine latente Härterkomponente für Harze mit für Amine reaktiven funktionellen Gruppen bereitzustellen, welche die genannten Nachteile des Standes der Technik nicht aufweist, sondern während der feuchtigkeitsinduzierten Härtung keine leichtflüchtigen organischen Verbindungen abspaltet, gute anwendungstechnische Eigenschaften besitzt und relativ einfach und kostengünstig hergestellt werden kann.

Diese Aufgabe wurde erfindungsgemäß durch die Verwendung von Diazepin-Derivaten der allgemeinen Formel (I) und/oder (II) gemäß Anspruch 1 gelöst.

Es hat sich nämlich überraschenderweise gezeigt, dass mit der erfindungsgemäß vorgeschlagenen Härterkomponente während der Härtungsreaktion überhaupt keine organischen Verbindungen abgespaltet werden. Außerdem lassen sich die entsprechenden latenten Härter gut mit allen gängigen Isocyanat- bzw. Epoxid-funktionellen Systemen formulieren, wobei die entsprechenden Härter/Harz-Umsetzungsprodukte eine sehr gute Lagerstabilität über einen längeren Zeitraum aufweisen, was ebenfalls nicht vorhersehbar war.

Erfindungsgemäß wird als latente Härterkomponente ein Diazepin-Derivat der allgemeinen Formel (I) und/oder (11) eingesetzt, 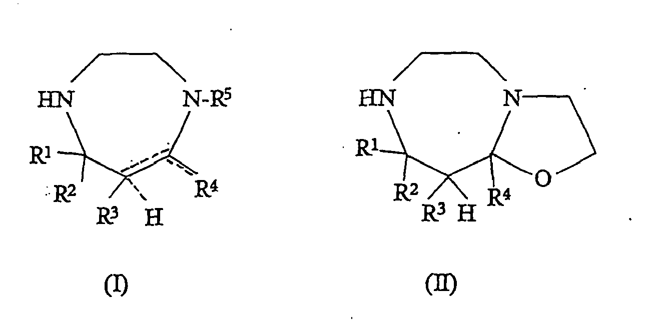 wobei
R¹, R² und R³ jeweils unabhängig voneinander H, C₁-C₂₀-Alkyl, C₃-C₈-Cycloalkyl, C₆-C₁₀-Aryl oder Alkylaryl mit C₁-C₄-Alkyl und C₆-C₁₀-Arylgruppen, R⁵ = C₁-C₂₀-Alkyl, C₃-C₈-Cycloalkyl, C₆-C₁₀-Aryl oder Alkylaryl mit C₁-C₄-Alkyl und C₆-C₁₀-Arylgruppen und R⁴= H, C₁-C₆-Alkyl bzw. C₁-C₆-Alkyliden bedeuten.
Formel (I) umfasst Verbindungen der Formeln 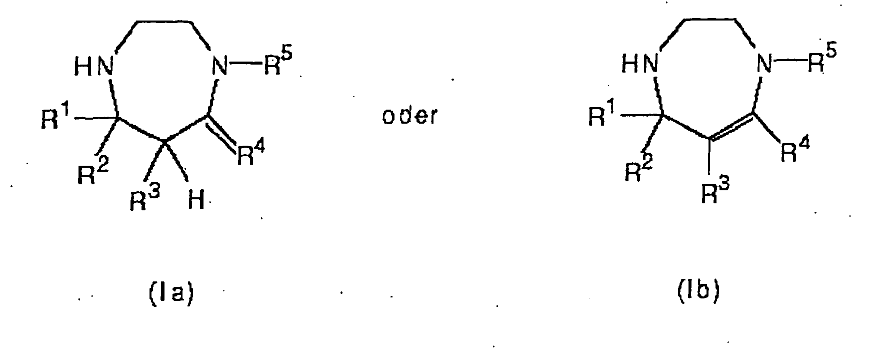 wobei R⁴
in Formel (Ia) für C₁-C₆-Alkyliden und
in Formel (Ib) für H oder C₁-C₆-Alkyl steht.

Bevorzugte Alkylreste, die entweder linear oder verzweigt sein können, sind C₁ bis C₄-Alkylgruppen. Bei den Cycloalkylresten sind Cyclopentyl- und Cyclohexylgruppen und bei den Arylresten Phenyl- und Naphthylgruppen als bevorzugt anzusehen.

Gemäß einer bevorzugten Ausführungsform werden vor allem Diazepin-Derivate der allgemeinen Formel (III) eingesetzt, 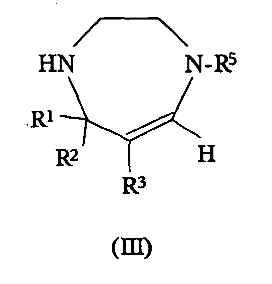 wobei R¹, R², R³ und R⁵ oben genannte Bedeutung besitzen. Die Diazepine gemäß der Formel (III) sind sehr einfach durch Umsetzung eines Diamins der Formel H₂N-CH₂-CH₂-NH-R⁵ mit einem α,β-ungesättigten Aldehyd der Formel R¹R²-C=CR³CHO entsprechend der Gleichung (A) herstellbar, wobei unter Wasserabspaltung die Cyclisierung zum Diazepin-Derivat erfolgt:

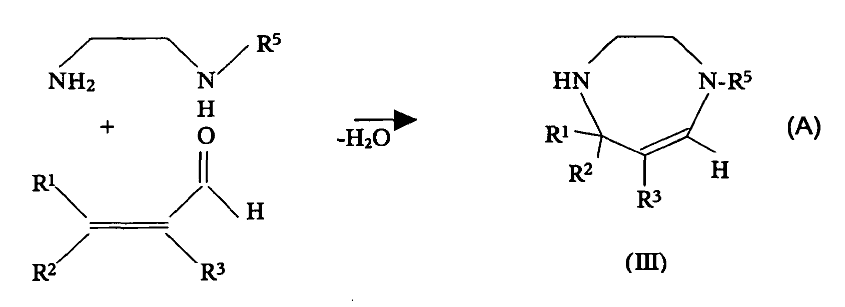

Es ist im Rahmen der vorliegenden Erfindung jedoch auch möglich, als latente Härterkomponente Diazepin-Derivate der allgemeinen Formel (IV) einzusetzen, die sich durch Umsetzung eines Diamins der Formel H₂N-CH₂-CH₂-NH-R⁵ mit einem α,β-ungesättigten Keton der Formel R¹R²C=CR³-COR⁴ (R⁴=C₁-C₆-Alkyl) entsprechend Gleichung (B) sehr leicht herstellen lassen: 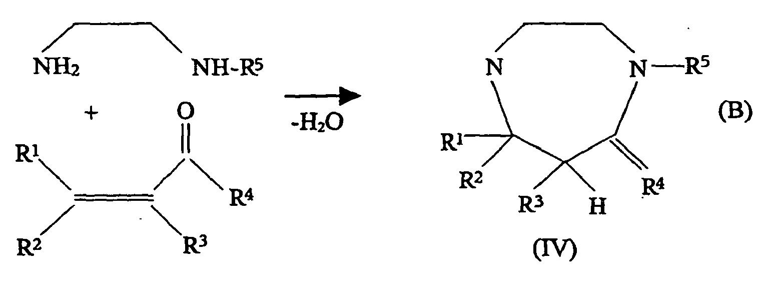 wobei in Formel (IV) R¹, R² und R³ oben genannte Bedeutung besitzen und R⁴ für C₁-C₆-Alkyliden steht.

Die erfindungsgemäß vorgeschlagenen bicyclischen Diazepin-Derivate der allgemeinen Formel (II) lassen sich durch Reaktion einer Verbindung der Formel H₂N-CH₂-CH₂-NH-CH₂CH₂OH mit einem α,β-ungesättigten Aldehyd oder Keton der Form R¹R²-C=CR³-COR⁴ entsprechend der Gleichung (C) herstellen:

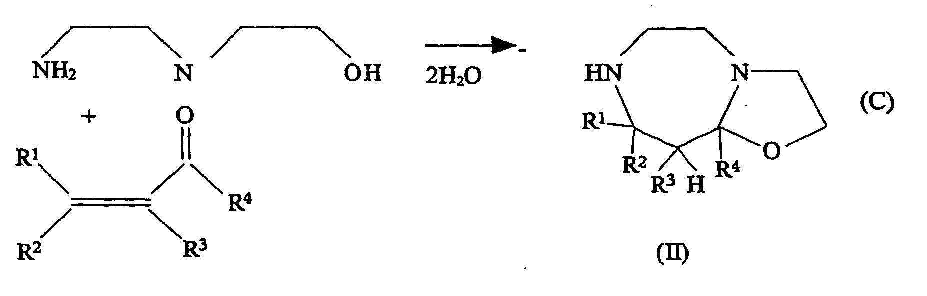

Die Herstellung der Diazepine entsprechend der Gleichungen (A), (B) und (C) können nach bekannten Methoden in technisch sehr einfacher Weise erfolgen (vgl. beispielsweise
a) K.J. van den Berg, L.G.J. van der Ven, A. Noomen, *4th Nümberg Congress Internally Blocked Polyamines: Synthesis and use* as *crosslinker in V.O.C compliant coatings,* paper 43, Vincentz Verlag, S. 8-12
b) Aziza Benalil, Andres Guerin, Bertrand Carboni, Michel Vaultier, *J*. *Chem. Soc. Perkin Trans I,* **1993,** 1061
c) Stanislaw P. Kasprzyk, Ryszard A. Koliñski, *J. Pol. Chem.,* **1984,** 58, 721
d) Douglas Lloyd, Wolfgang Scheibelein, Kálmán Hideg, *J. Chem. Res. (S)* **1981**, 62
e) Stanislaw P. Kasprzyk, Slawomir Szymañski, *Pol. J. of Chem.,* **1979,** 53, 525)

Die erfindungsgemäß vorgeschlagenen Diazepin-Derivate eignen sich hervorragend als latente Härterkomponente für Harze mit funktionellen Gruppen, die gegenüber Aminen reaktiv sind.

Vorzugsweise werden die erfindungsgemäßen Diazepin-Derivate für die Härtung von Polyurethan- und/oder Epoxidharzen eingesetzt.

Es ist im Rahmen der vorliegenden Erfindung jedoch ohne weiteres möglich, die Diazepin-Derivate bei anderen Polymersystemen, wie z.B. Polyacrylaten oder anderen Polymerverbindungen, zu verwenden, die mindestens eine gegenüber Aminen reaktive Gruppe aufweisen. Gemäß einer bevorzugten Ausführungsform wird hierbei das Diazepin-Derivat der Formel (I) über das sekundäre Amin an das zu härtende Harz addiert. Bei Feuchtigkeitseinwirkung wird dann der Diazepin-Ring hydrolytisch geöffnet und das dabei entstehende sekundäre Amin kann schließlich mit den reaktiven funktionellen Gruppen des zu härtenden Harzes abreagieren.

Diese Aushärtung des Gemisches bestehend aus Härterkomponente und Harz erfolgt vorzugsweise im Temperaturbereich von 5 bis 80 °C, insbesondere 20 bis 60 °C.

Die Menge der eingesetzten Härterkomponente ist relativ unkritisch, doch hat es sich aus wirtschaftlichen Gründen als besonders vorteilhaft erwiesen, das erfindungsgemäß vorgeschlagene Diazepin-Derivat in einer Menge von 0,01 bis 20 Gew.-%, insbesondere 0,1 bis 10 Gew.-%, bezogen auf die Menge des zu härtenden Harzes zu verwenden.

Aufgrund der besonderen Vorteile der erfindungsgemäßen Härterkomponente, wie gute Herstellbarkeit, hohe Umweltfreundlichkeit (es werden keine flüchtigen Verbindungen während der Härtung abgespalten) sowie gute Lagerstabilität der Harz/Härter-Gemische, eignen sich Diazepin-Derivate gemäß Formel (I) und/oder (II) hervorragend für einkomponentige, feuchtigkeitserhärtende Polymermassen, die vor allem für die Herstellung von Dichtmassen, Klebstoffen und Beschichtungsmitteln von besonderem Interesse sind.

Es wird die Verwendung von Diazepin-Derivaten der allgemeinen Formel (I) und/oder (II) 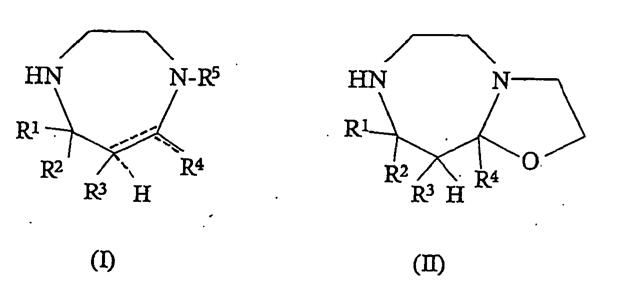 wobei R¹, R² und R³ unabhängig voneinander H, C₁-C₂₀-Alkyl, C₃-C₈-Cycloalkyl, C₆-C₁₀-Aryl oder Alkylaryl mit C₁-C₄-Alkyl und C₆-C₁₀-Arylgruppen, R⁵ = C₁-C₂₀-Alkyl, C₃-C₈-Cycloalkyl, C₆-C₁₀-Aryl oder Alkylaryl mit C₁-C₄-Alkyl und C₆-C₁₀-Arylgruppen und R⁴ = H, C₁-C₆-Alkyl(iden) bedeuten, als latente Härterkomponente für Harze mit für Amine reaktiven funktionellen Gruppen beschrieben. Aufgrund der besonderen Vorteile der erfindungsgemäß vorgeschlagenen Härterkomponente, wie gute Herstellbarkeit, hohe Umweltfreundlichkeit sowie ausgezeichnete Lagerstabilität der Harz/Härter-Gemische, eignen sich diese Diazepin-Derivate hervorragend für einkomponentige, feuchtigkeitserhärtende Polymermassen, die vor allem für die Herstellung von Dichtmassen, Klebstoffen und Beschichtungsmitteln von besonderem Interesse sind.

Die nachfolgenden Beispiele sollen die Erfindung näher veranschaulichen.

### Beispiele

### Beispiel 1A

### Herstellung einer Diazepin-Härterkomponente auf Basis von N-Methylethylendiamin und Mesityloxid

In einem Reaktionsgefäß mit Wasserabscheider werden 30 g (0,306 mol) Mesityloxid und 21,58 g (0,291 mol) N-Methylethylendiamin in 150 g abs. Toluol gelöst und zum Sieden erhitzt. Die Reaktionsmischung wird solange bei Siedetemperatur gehalten, bis kein Wasser mehr über den Wasserabscheider entfernt werden kann (Theorie: 5,24 g Wasser). Anschließend wird das Toluol vollständig entfernt. Man erhält eine schwach orangefarbene, etwas viskose Flüssigkeit.

### Beispiel 1B

### Herstellung eines NCO-haltigen Prepolymers mit der Diazepin-Härterkomponente aus Beispiel 1A

In einem Reaktionsgefäß werden 250 g (0,125 mol) Polypropylenglycol Dow Voranol P2000 (Fa. Dow) mit 55,55 g (0,25 mol) Isophorondiisocyanat (IPDI, Desmodur® I, Bayer AG) und 0,1 g T12-DBTL bei 85 °C gehalten, bis der theoretische NCO-Gehalt von 3,44 Gew.-% erreicht ist. Anschließend wird die Hälfte der Isocyanat-Gruppen des Prepolymers bei 30 °C mit 21,54 g (0,125 mol) Diazepin-Härterkomponente aus Beispiel 1 A umgesetzt, so dass ein NCO-Endgehalt von 1,61 Gew.-% erreicht wird.

Das erhaltene Produkt ist harzig, durchsichtig klar und besitzt eine schwache orange Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 1C

### Herstellung eines NCO-haltigen Prepolymers mit der Diazepin-Härterkomponente aus Beispiel 1A

In einem Reaktionsgefäß werden 250 g (0,125 mol) Polycarbonatpolyol Desmophen C200 (Bayer AG) mit 43,54 g (0,25 mol) Toluylendüsocyanat (TDI, Desmodur^{®} T 80, Bayer AG) und 0,1 g T12-DBTL bei 85 °C gehalten, bis der theoretische NCO-Gehalt von 3,58 Gew.-% erreicht ist. Anschließend wird die Hälfte der Isocyanat-Gruppen des Prepolymers bei 30 °C mit 21,54 g (0,125 mol) Diazepin-Härterkomponente aus Beispiel 1 A umgesetzt, so dass ein NCO-Endgehalt von 1,67 Gew.-% erreicht wird. Die andere Hälfte der Methacrylat-Gruppen bleibt unverändert.

Das erhaltene Produkt ist harzig, durchsichtig klar und besitzt eine schwache gelbliche Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 2A

### Herstellung einer Diazepin-Härterkomponente auf Basis von N-Ethylethylendiamin und Mesityloxid

In einem Reaktionsgefäß mit Wasserabscheider werden 30 g (0,306 mol) Mesityloxid und 25,66 g (0,291 mol) N-Ethylethylendiamin in 150 g abs. Toluol gelöst und zum Sieden erhitzt. Die Reaktionsmischung wird solange bei Siedetemperatur gehalten, bis kein Wasser mehr über den Wasserabscheider entfernt werden kann (Theorie: 5,24 g Wasser). Anschließend wird das Toluol vollständig entfernt. Man erhält eine schwach orangefarbene, etwas viskose Flüssigkeit.

### Beispiel 2B

### Herstellung eines NCO-haltigen Prepolymers mit der Diazepin-Härterkomponente aus Beispiel 2A

In einem Reaktionsgefäß werden 250 g (0,125 mol) Polycarbonatpolyol Desmophen C200 (Bayer AG) mit 55,55 g (0,25 mol) Isophorondüsocyanat (IPDI, Desmodur^{®} I, Bayer AG) und 0,1 g T12-DBTL bei 85 °C gehalten, bis der theoretische NCO-Gehalt von 3,44 Gew.-% erreicht ist. Anschließend wird die Hälfte der Isocyanat-Gruppen des Prepolymers bei 30 °C mit 23,34 g (0,125 mol) Diazepin-Härterkomponente aus Beispiel 2 A umgesetzt, so dass ein NCO-Gehalt von 1,60 Gew.-% erreicht wird.

Das erhaltene Produkt ist harzig, durchsichtig klar und besitzt eine schwache orange Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 2C

### Herstellung eines NCO-haltigen Prepolymers mit der Diazepin-Härterkomponente aus Beispiel 2A

In einem Reaktionsgefäß werden 250 g (0,125 mol) Polycarbonatpolyol Desmophen C200 (Bayer AG) mit 42,05 g (0,25 mol) 1,6-Hexamethylendiisocyanat (HDI, Desmodur^{®} H, Bayer AG) und 0,1 g T12-DBTL bei 85 °C gehalten, bis der theoretische NCO-Gehalt von 3,60 Gew.-% erreicht ist. Anschließend wird die Hälfte der Isocyanat-Gruppen des Prepolymers bei 30 °C mit 21,54 g (0,125 mol) Diazepin-Härterkomponente aus Beispiel. 2 A umgesetzt, so dass ein NCO-Endgehalt von 1,67 Gew.-% erreicht wird.

Das erhaltene Produkt ist harzig, durchsichtig klar und besitzt eine schwache gelbliche Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 3A

### Herstellung einer Diazepin-Härterkomponente auf Basis von N-Methylethylendiamin und 3-Methylcrotonaldehyd

In einem Reaktionsgefäß mit Wasserabscheider werden 30 g (0,357 mol) 3-Methylcrotonaldehyd und 25,18 g (0,340 mol) N-Methylethylendiamin in 150 g abs. Toluol gelöst und zum Sieden erhitzt. Die Reaktionsmischung wird solange bei Siedetemperatur gehalten, bis kein Wasser mehr über den Wasserabscheider entfernt werden kann (Theorie: 6,11 g Wasser). Anschließend wird das Toluol vollständig entfernt. Man erhält eine schwach rötliche, etwas viskose Flüssigkeit.

### Beispiel 3B

### Herstellung eines NCO-haltigen Prepolymers mit der Diazepin-Härterkomponente aus Beispiel 3A

In einem Reaktionsgefäß werden 250 g (0,123 mol) Polyesterpolyol Bester 42 H (Fa. Poliolchimica) mit 54,86 g (0,247 mol) Isophorondüsocyanat (IPDI, Desmodur^{®} I, Bayer AG) und 0,1 g T12-DBTL bei 85 °C gehalten, bis der theoretische NCO-Gehalt von 3,40 Gew.-% erreicht ist. Anschließend wird die Hälfte der Isocyanat-Gruppen des Prepolymers bei 30 °C mit 17,28 g (0,123 mol) Diazepin-Härterkomponente aus Beispiel 3 A umgesetzt, so dass ein NCO-Gehalt von 1,61 Gew.-% erreicht wird.

Das erhaltene Produkt ist harzig, durchsichtig klar und besitzt eine schwache rötliche Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 3C

### Herstellung eines NCO-haltigen Prepolymers mit der Diazepin-Härterkomponente aus Beispiel 3A

In einem Reaktionsgefäß werden 250 g (0,123 mol) Polyesterpolyol Bester 42 H (Fa. Poliolchimica) mit 60,32 g (0,247 mol) m-Tetramethyhcylylendiisocyanat (TMXDI^{®}, Fa. Cytec) und 0,1 g T12-DBTL bei 85 °C gehalten, bis der theoretische NCO-Gehalt von 3,34 Gew.-% erreicht ist. Anschließend wird die Hälfte der Isocyanat-Gruppen des Prepolymers bei 30 °C mit 17,33 g (0,123 mol) Diazepin-Härterkomponente aus Beispiel 3 A umgesetzt, so dass ein NCO-Gehalt von 1,58 Gew.-% erreicht wird.

Das erhaltene Produkt ist harzig, durchsichtig klar und besitzt eine schwache rötliche Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 4A

### Herstellung einer Diazepin-Härterkomponente auf Basis von N-Ethylethylendiamin und 3-Methylcrotonaldehyd

In einem Reaktionsgefäß mit Wasserabscheider werden 30 g (0,357 mol) 3-Methylcrotonaldehyd und 29,94 g (0,340 mol) N-Ethylethylendiamin in 150 g abs. Toluol gelöst und zum Sieden erhitzt. Die Reaktionsmischung wird solange bei Siedetemperatur gehalten, bis kein Wasser mehr über den Wasserabscheider entfernt werden kann (Theorie: 6,11 g Wasser). Anschließend wird das Toluol vollständig entfernt. Man erhält eine schwach rötliche, etwas viskose Flüssigkeit.

### Beispiel 4B

### Herstellung eines NCO-haltigen Prepolymers mit der Diazepin-Härterkomponente aus Beispiel 4A

In einem Reaktionsgefäß werden 250 g (0,083 mol) Polypropylenglycol Dow Voranol P3000 (Fa. Dow) mit 37,03 g (0,167 mol) Isophorondüsocyanat (IPDI, Desmodur^{®} I, Bayer AG) und 0,1 g T12-DBTL bei 85 °C gehalten, bis der theoretische NCO-Gehalt von 2,44 Gew.-% erreicht ist. Anschließend wird die Hälfte der Isocyanat-Gruppen des Prepolymers bei 30 °C mit 12,88 g (0,083 mol) Diazepin-Härterkomponente aus Beispiel 4 A umgesetzt, so dass ein NCO-Endgehalt von 1,17 Gew.-% erreicht wird.

Das erhaltene Produkt ist harzig, durchsichtig klar und besitzt eine schwache rötliche Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 4C

### Herstellung eines NCO-haltigen Prepolymers mit der Diazepin-Härterkomponente aus Beispiel 4A

In einem Reaktionsgefäß werden 250 g (0,063 mol) Polypropylenglycol Dow Voranol P4000 (Fa. Dow) mit 32,79 g (0,125 mol) Dicyclohexylmethandiisocyanat (H₁₂MDI, Desmodur^{®} W, Bayer AG) und 0,1 g T12-DBTL bei 85 °C gehalten, bis der theoretische NCO-Gehalt von 1,86 Gew.-% erreicht ist. Anschließend wird die Hälfte der Isocyanat-Gruppen des Prepolymers bei 30 °C mit 9,66 g (0,063 mol) Diazepin-Härterkomponente aus Beispiel 4 A umgesetzt, so dass ein NCO-Endgehalt von 0,90 Gew.-% erreicht wird.

Das erhaltene Produkt ist harzig, durchsichtig klar und besitzt eine schwache rötliche Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 5A

### Herstellung einer Diazepin-Härterkomponente auf Basis von N-(2-Hydroxyethyl)ethylendiamin und Mesityloxid

In einem Reaktionsgefäß mit Wasserabscheider werden 30 g (0,306 mol) Mesityloxid und 30,32 g (0,291 mol) N-(2-Hydroxyethyl)ethylendiamin in 150 g abs. Toluol gelöst und zum Sieden erhitzt. Die Reaktionsmischung wird solange bei Siedetemperatur gehalten, bis kein Wasser mehr über den Wasserabscheider entfernt werden kann (Theorie: 5,24 g Wasser). Anschließend wird das Toluol vollständig entfernt. Man erhält eine orangefarbene, etwas viskose Flüssigkeit.

### Beispiel 5B

### Herstellung eines NCO-haltigen Prepolymers mit der Diazepin-Härterkomponente aus Beispiel 5A

In einem Reaktionsgefäß werden 250 g (0,25 mol) Polypropylenglycol Dow Voranol P1010 (Fa. Dow) mit 87,08 g (0,50 mol) Toiuylendüsocyanat (TDI, Desmodur^{®} T 80, Bayer AG) und 0,1 g T12-DBTL bei 85 °C gehalten, bis der theoretische NCO-Gehalt von 6,23 Gew.-% erreicht ist. Anschließend werden die freien Isocyanat-Gruppen des Prepolymers bei 30 °C mit 15,36 g (0,083 mol) Diazepin-Härterkomponente aus Beispiel 5 A umgesetzt, so dass ein NCO-Gehalt von 2,98 Gew.-% erreicht wird.

Das erhaltene Produkt ist harzig, durchsichtig klar und besitzt eine schwache orange Färbung. Auf einer Glasplatte aufgestrichen, härtet es vollständig durch, ohne unangenehme Geruchsbelästigung. Auch in der Dickschichtanwendung erfolgt eine vollständige Durchhärtung.

### Beispiel 5C

### Herstellung eines NCO-haltigen Prepolymers mit der Diazepin-Härterkomponente aus Beispiel 5A

In einem Reaktionsgefäß werden 250 g (0,123 mol) Polyesterpolyol Bester 42 H (Fa. Poliolchimica) mit 41,53 g (0,247 mol) 1,6-Hexamethylendiisocyanat (HDI, Desmodur^{®} H, Bayer AG) und 0,1 g T12-DBTL bei 85 °C gehalten, bis der theoretische NCO-Gehalt von 3,56 Gew.-% erreicht ist. Anschließend werden die freien Isocyanat-Gruppen des Prepolymers bei 30 °C mit 7,58 g (0,041 mol) Diazepin-Härterkomponente aus Beispiel 5 A umgesetzt, so dass ein NCO-Gehalt von 1,73 Gew.-% erreicht wird.

Das erhaltene Produkt ist harzig, durchsichtig klar und besitzt eine schwache orange Färbung. Auf einer Glasplatte aufgestrichen, härtet es ohne unangenehme Geruchsbelästigung vollständig durch. Auch in der Dickschichtanwendung erfolgt eine vollständige Durchhärtung.

### Beispiel 6

### Lagerstabilitätsprüfung

Die gemäß den Beispielen 1 bis 5 hergestellten Gemische aus Prepolymeren und latenten Härtern werden einer Lagerung in geschlossenen Gefäßen bei Raumtemperatur (20-25 °C) unterzogen und dabei folgende Ergebnisse erhalten:

Nach einer Lagerzeit von 12 Monaten bei einer Temperatur zwischen 20-25 °C in licht- und luftdichten Gefäßen wurde bei allen Beispielen keine nennenswerte Farbveränderung festgestellt. Der Viskösitätsanstieg über diesen Zeitraum war sehr gering (Anstieg um einen Faktor im Bereich von 1,1-1,3 gegenüber der Anfangsviskosität) und zeigte keinerlei Auswirkungen auf die Aushärtung bzw. die Verarbeitbarkeit.

## Patentansprüche

1. Verwendung von Diazepin-Derivaten der allgemeinen Formel (I) und/oder (II) 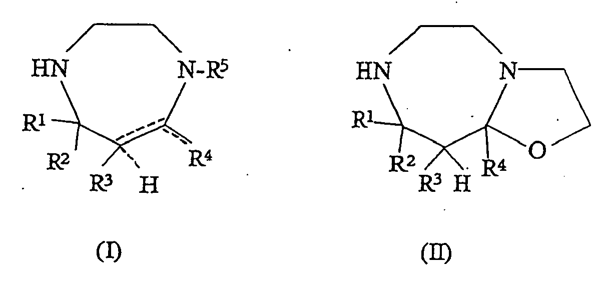 wobei
R¹, R² und R³ unabhängig voneinander H, C₁-C₂₀-Alkyl, C₃-C₈-Cycloalkyl, C₆-C₁₀-Aryl oder Alkylaryl mit C₁-C₄-Alkyl und C₆-C₁₀-Arylgruppen,
R⁵ = C₁-C₂₀-Alkyl, C₃-C₈-Cycloalkyl, C₆-C₁₀-Aryl oder Alkylaryl mit C₁-C₄-Alkyl und C₆-C₁₀-Arylgruppen,
R⁴ = H, C₁-C₆-Alkyl oder C₁-C₆-Alkyliden
bedeuten,
als latente Härterkomponente für Harze mit für Amine reaktiven funktionellen Gruppen.

2. Verwendung nach Anspruch 1,
**dadurch gekennzeichnet,**
**dass** Diazepin-Derivate der Formel (III) 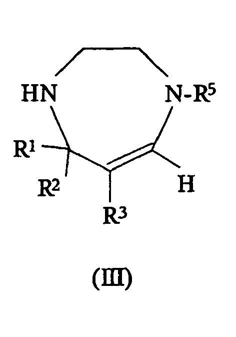 eingesetzt werden, wobei R¹, R², R³ und R⁵ oben genannte Bedeutung besitzen.

3. Verfahren zum Härten von Harzen mit für Amine reaktiven funktionellen Gruppen mit Hilfe der Diazepin-Derivate der Formeln (I) und/oder (II) gemäss Anspruch 1.

4. Verfahren nach Anspruch 3,
**dadurch gekennzeichnet,**
**dass** man das Diazepin-Derivat der Formeln (I) und/oder (II) über das sekundäre Amin an das zu härtende Harz addiert, den an das Harz addierten Diazepin-Ring durch Feuchtigkeitseinwirkung hydrolytisch öffnet und das dabei entstehende sekundäre Amin mit den reaktiven funktionellen Gruppen des zu härtenden Harzes abreagieren lässt.

5. Verfahren nach einem der Ansprüche 3 bis 4,
**dadurch gekennzeichnet,**
**dass** man als zu härtendes Harz Polyurethane oder Polyepoxide sowie Mischungen davon einsetzt.

6. Verfahren nach einem der Ansprüche 3 bis 5,
**dadurch gekennzeichnet,**
**dass** man die Härterkomponente in einer Menge von 0,01 bis 20 Gew.-%, insbesondere 0,1 bis 10 Gew.-%, bezogen auf die Menge des zu härtenden Harzes verwendet.

7. Verfahren nach einem der Ansprüche 3 bis 6,
**dadurch gekennzeichnet,**
**dass** man die Aushärtung des Gemisches bestehend aus Härterkomponente und Harz bei einer Temperatur von 5 bis 80 °C durchführt.

## Claims

1. Use of diazepine derivatives of the general formula (I) and/or (II) 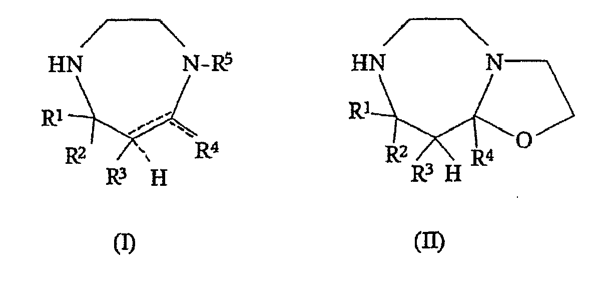 where
R¹, R² and R³ independently of one another are H, C₁-C₂₀ alkyl, C₃-C₈ cycloalkyl, C₆-C₁₀ aryl or alkylaryl with C₁-C₄ alkyl and C₆-C₁₀ aryl groups,
R⁵ is C₁-C₂₀ alkyl, C₃-C₈ cycloalkyl, C₆-C₁₀ aryl or alkylaryl with C₁-C₄ alkyl and C₆-C₁₀ aryl groups,
R⁴ is H, C₁-C₆ alkyl or C₁-C₆ alkylidene
as a latent hardener component for resins containing amine-reactive functional groups.

2. Use according to Claim 1, **characterized in that** diazepine derivatives of the formula (III) 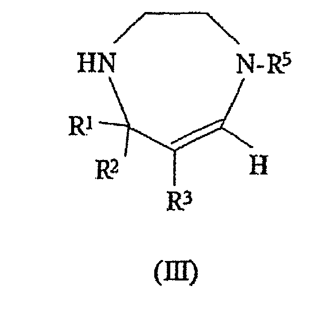 are used where R¹, R², R³ and R⁵ are as defined above.

3. Method of curing resins containing amine-reactive functional groups using the diazepine derivatives of the formulae (I) and/or (II) in accordance with Claim 1.

4. Method according to Claim 3, **characterized in that** the diazepine derivative of the formulae (I) and/or (II) is added via the secondary amine with the resin that is to be cured, the diazepine ring added onto the resin is opened hydrolytically by exposure to moisture, and the resultant secondary amine is reacted with the reactive functional groups of the resin that is to be cured.

5. Method according to one of Claims 3 to 4, **characterized in that** polyurethanes or polyepoxides and also mixtures thereof are used as the resin that is to be cured.

6. Method according to one of Claims 3 to 5, **characterized in that** the hardener component is used in an amount of 0.01 to 20% by weight, in particular 0.1 to 10% by weight, based on the amount of the resin that is to be cured.

7. Method according to one of Claims 3 to 6, **characterized in that** the mixture consisting of hardener component and resin is cured at a temperature of 5 to 80°C.

## Revendications

1. Utilisation de dérivés de diazépine de formule générale (I) et/ou (II) 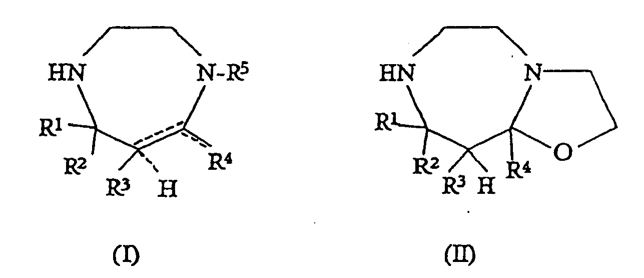 dans lesquelles
R¹, R² et R³ représentent, indépendamment les uns des autres, H, alkyle en C₁-C₂₀, cycloalkyle en C₃-C₈, aryle en C₆-C₁₀ ou alkylaryle contenant des groupes alkyle en C₁-C₄ et aryle en C₆-C₁₀,
R⁵ représente alkyle en C₁-C₂₀, cycloalkyle en C₃-C₈, aryle en C₆-C₁₀ ou alkylaryle contenant des groupes alkyle en C₁-C₄ et aryle en C₆-C₁₀,
R⁴ représente H, alkyle en C₁-C₆ ou alkylidène en C₁-C₆,
comme constituants durcisseurs latents pour des résines ayant des groupes fonctionnels pouvant réagir avec des amines.

2. Utilisation selon la revendication 1, **caractérisée en ce que** l'on utilise des dérivés de diazépine de formule (III) 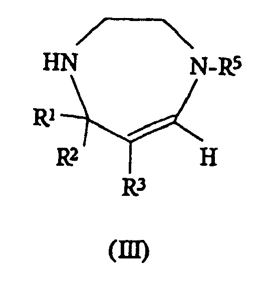 dans laquelle R¹, R², R³ et R⁴ ont la signification indiquée ci-dessus.

3. Procédé de durcissement de résines ayant des groupes fonctionnels pouvant réagir avec des amines à l'aide des dérivés de diazépine de formule (I) et/ou (II) selon la revendication 1.

4. Procédé selon la revendication 3, **caractérisé en ce que** l'on additionne le dérivé de diazépine de formule (I) et/ou (II) sur la résine à durcir par l'intermédiaire de l'amine secondaire, on ouvre le cycle diazépine additionné sur la résine par hydrolyse sous l'action de l'humidité, et on laisse réagir l'amine secondaire ainsi formée avec les groupes fonctionnels réactifs de la résine à durcir.

5. Procédé selon l'une des revendications 3 à 4, **caractérisé en ce que** l'on utilise comme résine à durcir des polyuréthanes ou des polyépoxydes, ainsi que leurs mélanges.

6. Procédé selon l'une des revendications 3 à 5, **caractérisé en ce que** l'on utilise le constituant durcisseur en une quantité de 0,01 à 20 % en poids, en particulier de 0,1 à 10 % en poids, par rapport à la quantité de la résine à durcir.

7. Procédé selon l'une des revendications 3 à 6, **caractérisé en ce que** l'on effectue le durcissement du mélange composé du constituant durcisseur et de la résine à une température de 5 à 80°C.
